# EUROPEAN PATENT SPECIFICATION

(11) **EP 4 156 575 B1**
(45) Date of publication and mention of the grant of the patent: **22.10.2025**
(21) Application number: 22187138.7
(22) Date of filing: 27.07.2022
(51) Int. Cl.: H04L 1/16, H04L 1/18

(54) **TECHNOLOGIES FOR SIGNALING RELATED TO QUALITY OF SERVICE FLOW TO DATA RADIO BEARER MAPPING UPDATES**
TECHNOLOGIEN ZUM SIGNALISIEREN IN ZUSAMMENHANG MIT DEM DIENSTGÜTEFLUSS VON AKTUALISIERUNGEN VON DATENFUNKTRÄGERN
TECHNOLOGIES DE SIGNALISATION RELATIVES AU FLUX DE QUALITÉ DE SERVICE DANS DES MISES À JOUR DE MAPPAGE DE PORTEUSE RADIO DE DONNÉES

(30) Priority: 25.09.2021 US 202163248429 P
(43) Date of publication of application: 29.03.2023
(73) Proprietor: Apple Inc., Cupertino CA 95014 (US)
(72) Inventor: ROSSBACH, Ralf, 85579 Bavaria-Bayern (DE); JOSE, Bobby, Cupertino, 95014 (US); XU, Fangli, Chaoyang District, 100022 (CN); DEPARIS, Francois E., 85579 Bavaria-Bayern (DE); HU, Haijing, Cupertino, 95014 (US); KUGLER, Martin, 85579 Bavaria-Bayern (DE); SHIKARI, Murtaza A., Cupertino, 95014 (US); PALLE VENKATA, Naveen Kumar R., Cupertino, 95014 (US); NUGGEHALLI, Pavan, Cupertino, 95014 (US); VANGALA, Sarma V., Cupertino, 95014 (US); NIMMALA, Srinivasan, Cupertino, 95014 (US); VENKATARAMAN, Vijay, Cupertino, 95014 (US)
(74) Representative: Barton, Russell Glen

(56) References cited:
- US-A1- 2021 127 295
- INTERDIGITAL: "Enhancements based on new QoS requirements", vol. RAN WG2, no. eMeeting; 20210412 - 20210420, 1 April 2021 (2021-04-01), XP051992262, Retrieved from the Internet <URL:https://ftp.3gpp.org/tsg_ran/WG2_RL2/TSGR2_113bis-e/Docs/R2-2103798.zip R2-2103798 (R17 IIoT WI AI 8.5.4 QoS).doc> [retrieved on 20210401]
- APPLE INC: "Enhancements to the SDAP layer", vol. TSG RAN, no. Electronic Meeting; 20210913 - 20210917, 6 September 2021 (2021-09-06), XP052050329, Retrieved from the Internet <URL:https://ftp.3gpp.org/tsg_ran/TSG_RAN/TSGR_93e/Docs/RP-212354.zip RP-212354 Enhancements to the SDAP layer.pdf> [retrieved on 20210906]

## Description

### BACKGROUND

Third Generation Partnership Project (3GPP) Technical Specifications (TSs) define standards for New Radio (NR) wireless networks. These TSs describe aspects related to operations at various layers of a protocol stack. A layer 2 (L2) of NR networks is split into various sublayers including: a medium access control (MAC), a radio link control (RLC), a packet data convergence protocol (PDCP) layer, and a service data adaptation protocol (SDAP).

Related technology is discussed in
US 2021/127295 A1 "METHOD AND APPARATUS FOR TRANSMITTING PACKET BASED ON TYPE OF PACKET BY TRANSMISSION END IN WIRELESS COMMUNICATION SYSTEM"
INTERDIGITAL: "Enhancements based on new QoS requirements", 3GPP DRAFT; R2-2103798

### BRIEF DESCRIPTION OF THE DRAWINGS

FIG. 1 illustrates a network environment in accordance with some embodiments.
FIG. 2 illustrates uplink and downlink SDAP data protocol data units (PDUs) and a SDAP control PDU in accordance with some embodiments.
FIG. 3 illustrates a message flow that includes a quality of service (QoS) flow to data radio bearer (DRB) remapping in accordance with some embodiments.
FIG. 4 illustrates an operational flow/algorithmic structure in accordance with some embodiments.
FIG. 5 illustrates another operational flow/algorithmic structure in accordance with some embodiments.
FIG. 6 illustrates another operational flow/algorithmic structure in accordance with some embodiments.
FIG. 7 illustrates a user equipment in accordance with some embodiments.
FIG. 8 illustrates a base station in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B).

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

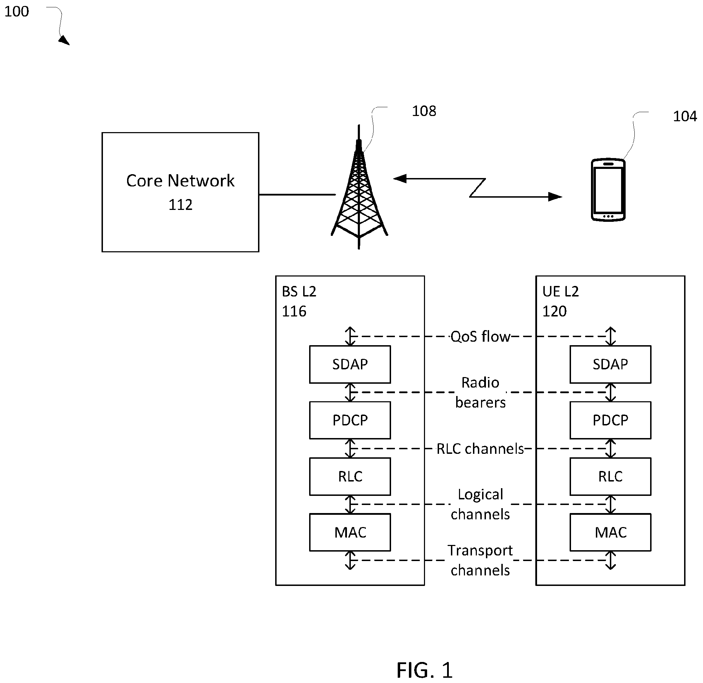

FIG. 1 illustrates a network environment 100 in accordance with some embodiments. The network environment 100 may include a UE 104 communicatively coupled with a base station such as, for example, base station 108. The UE 104 and the base station 108 may communicate over air interfaces compatible with 3GPP TSs such as those that define Fifth Generation (5G) NR system standards. The base station 108 may be a next generation node B (gNB) to provide one or more 5G New Radio (NR) cells to provide NR user plane and control plane protocol terminations toward the UE 104.

The network environment 100 may further include a core network (CN) 112. For example, the CN 112 may comprise a 5^{th} Generation Core network (5GC). The CN 112 may be coupled to the base station 108 via a fiber optic or wireless backhaul. The CN 112 may provide functions for the UE 104 via the base station 108. These functions may include managing subscriber profile information, subscriber location, authentication of services, or switching functions for voice and data sessions.

The base station 108 may have circuitry, for example, BS L2 116, to implement L2 functionality including SDAP, PDCP, RLC, and MAC sublayer functionality. Similarly, the UE 104 may have circuitry, for example, UE L2 120, to implement similar L2 functionality so that the UE 104 and the base station 108 are communicatively coupled by transport channels, logical channels, RLC channels, radio bearers, and quality of service (QoS) flows.

Briefly, the MAC sublayer may manage scheduling/priority handling, (de)multiplexing, and HARQ processes between logical channels and transport channels. The RLC sublayer may manage (re-)segmentation and error correction through automatic repeat request (ARQ) between logical channels and RLC channels. The PDCP sublayer may manage robust header (de)compression and security between data radio bearers (DRBs) and RLC channels. And the SDAP sublayer may manage QoS flow handling between the QoS flows and the DRBs. In the downlink, a sublayer may convert service data units (SDUs) into protocol data units (PDUs) for provision to lower sublayers. In the uplink, a sublayer may convert PDUs to SDUs for provision to upper sublayers.

Unless otherwise described, operation of the SDAP sublayer may be consistent with the description in 3GPP TS 37.324 v16.3.0 (2021-06).

In the uplink, a transmitting SDAP entity may receive an SDAP SDU from an upper layer for a particular QoS flow. The SDAP entity may then map the SDAP SDU to a default DRB, if there is no QoS flow-to-DRB mapping rule stored for the QoS flow, or to the DRB indicated by the mapping rule if there is a QoS flow-to-DRB mapping rule stored for the QoS flow. The QoS flow-to-DRB mappings may be reflective (for example, an UL mapping may be defined to be the same as a DL mapping) or configured by an RRC layer.

TS 37.324 defines an SDAP end marker control PDU that is specific to SDAP and applies to QoS at an access stratum. Subclauses 5.3.1 and 5.3.2 of TS 37.324 describe various rules for inserting an end marker to a DRB. In general, an end marker, which may be applicable to both reflective and RRC-configured QoS mappings, may be inserted to a DRB when a QoS flow-to-DRB mapping rule changes.

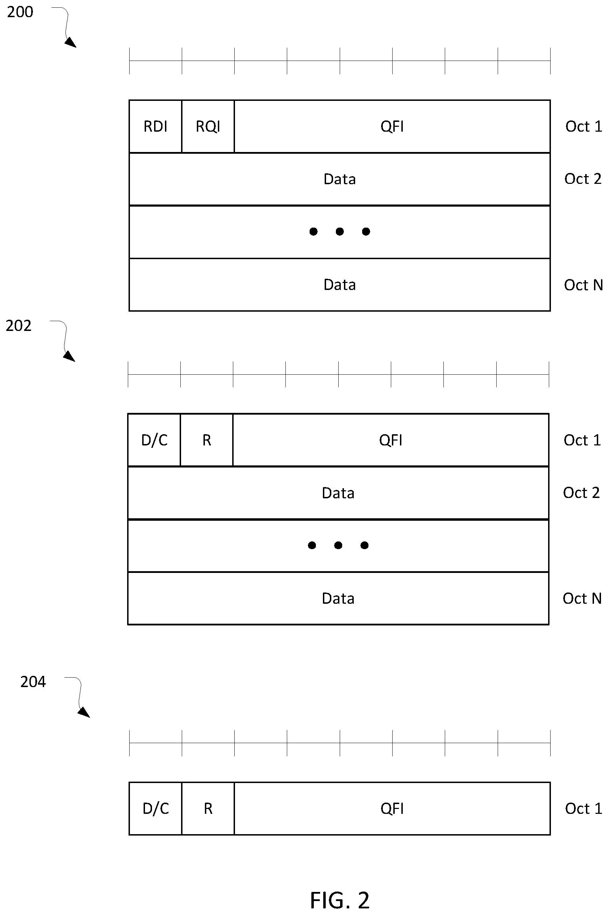

FIG. 2 illustrates a downlink (DL) SDAP data PDU 200 with a configured SDAP header in accordance with some embodiments. The first octet may be an SDAP header that includes a reflective QoS flow to data radio bearer mapping indication (RDI) field, a reflective QoS indication (RQI) field, and a QoS flow indicator (QFI) field. The base station 108 may use the RDI field to steer specific QoS flows from one DRB to another. This may be used to enhance the QoS handling in a window of time.

When the RDI bit is set in the DL SDAP header, uplink packets that belong to the same QFI may be steered by the UE 104 to the same DRB on which the DL packet is received.

FIG. 2 also illustrates an uplink (UL) SDAP data PDU 202 with a configured SDAP header in accordance with some embodiments. The first octet may include a D/C field with a bit to indicate whether the UL SDAP PDU is an SDAP data PDU or an SDAP control PDU; a reserved field; and a six-bit QFI field to indicate an identifier of a QoS flow to which the SDAP PDU belongs.

FIG. 2 also illustrates an end marker control PDU 204 that includes a D/C field with a bit to indicate whether the SDAP PDU is an SDAP data PDU or an SDAP control PDU; a reserved field; and a six-bit QFI field to indicate an identifier of a QoS flow to which the SDAP PDU belongs. The UE 104 may send the end marker control PDU 204 as a last packet on an old DRB that was associated with the QFI. This may serve as an indication to the base station 108 that no more packets belonging to the (remapped) QFI will be sent over the old DRB from that point onwards.

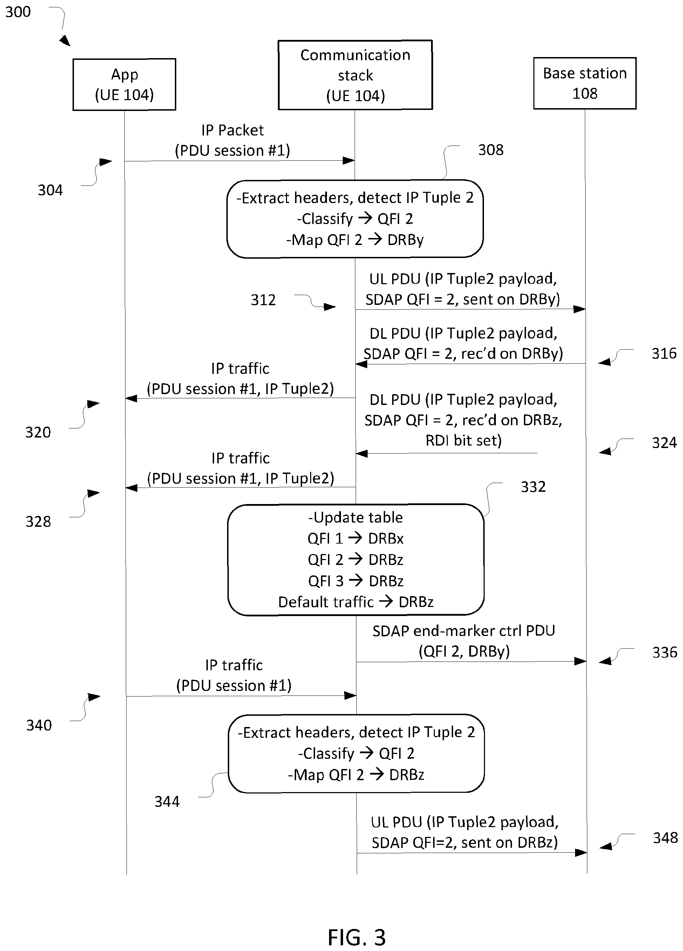

FIG. 3 illustrates an example message flow 300 that includes a QoS flow remapping using reflective QoS in accordance with some embodiments.

At 304, an application (APP) on the UE 104 may provide an IP packet to a communication stack of the UE 104. The communication stack may include various non-access stratum (NAS) and sublayer (for example, SDAP sublayer) functionality. The IP packet may be associated with a PDU session #1.

At 308, the communication stack may extract headers to detect a 5-tuple for IP flow 2 (IP Tuple 2). The communication stack may determine, based on the extracted header, that the IP flow is classified as a particular QFI (for example, QFI #2). The communication stack may map one or more QoS flows to a DRB (for example, QFI 2 to DRB y). This may be done based on a configured or default mapping rule.

At 312, the communication stack may transmit an uplink (UL) PDU with IP Tuple2 payload and an SDAP header with QFI = 2. The UL PDU may be sent on DRBy.

At 316, the communication stack may receive a DL PDU on DRBy with IP Tuple2 payload and an SDAP header with QFI = 2. The SDAP sublayer may then provide IP traffic to the App, at 320, based on the DL PDU.

At 324, the communication stack may receive another DL PDU from the base station 108. This DL PDU may be received on DRBz and may include an RDI bit set in the SDAP header. The set RDI bit may indicate that the mapping of QFI2 has been changed to DRBz.

The communication stack may transmit IP traffic to the App at 328 and may update QoS flow to DRB mapping tables of the SDAP sublayer at 332. The tables may be updated to indicate that the QFI 2 is now mapped to DRBz.

At 336, the communication stack may transmit an SDAP end marker control PDU to the base station 108. The SDAP end marker control PDU may have an SDAP header with QFI = 2 and may be sent on the old DRB, e.g., DRBy. The SDAP end marker control PDU may provide an indication to the base station 108 that the SDAP sublayer will no longer transmit PDUs for QFI 2 on the old DRB (DRBy).

At 340, the communication stack may have further uplink IP traffic for PDU session #1, extract headers, classify the traffic as QFI 2, and map the traffic to DRBz based on the updated table at 344.

At 348, the communication stack may transmit an UL PDU using the new DRBz.

The base station 108 may use the SDAP end marker control PDU, received at 336, to assist reordering functions performed by the base station 108 to provide in-order delivery of packets.

The remapping of a QoS flow from one DRB to another may be needed when the DRB mapping rule of a QoS flow changes. This may happen during normal data transfer when the base station 108 updates the QoS flow-to-DRB mapping rule or at handover when a target base station has a different mapping policy than the source base station. When remapping a QoS flow from an old DRB to a new DRB, some packets from the QoS flow may likely still be awaiting transmission on the old DRB. After updating the mapping rule, packets from the QoS flow may, therefore, reach the receiver from both the old DRB mapping and the new DRB mapping in parallel for long as the old DRB still contains packets from that QoS flow. In-order delivery may require buffering of fresh data on the new DRB for as long as data remains on the old DRB.

While the buffering the data may take place at either the transmitter or the receiver, it may typically be by the base station 108 to reduce buffering requirements for the UE 104. For example, the buffering may be performed in the transmitter for the downlink and the receiver for the uplink. Thus, the UE 104 sending the SDAP end marker control PDU may allow the base station 108 to confirm that all data from the relocated QoS flow has been sent on the old DRB. As shown in the message flow 300, the end marker may be transmitted on the old DRB after updating the QoS flow-to-DRB mapping rule.

For the uplink, when the base station 108 receives UL data from the UE 104, fresh data from the new DRB may only be delivered to upper sublayers (and UPF) once all the packets from the relocated QoS flow on the old DRB have been received and delivered in-sequence to the upper sublayers. This may be transparent to the UE 104, but may require the base station 108 to buffer the fresh data from the QoS flow.

For the downlink, when the base station 108 receives DL data from the UPF on the N3 interface, the base station 108 may start a downlink data transmission of fresh data to the UE 104 on the new DRB only after having transmitted all packets from the relocated QoS flow on the old DRB. This may also be transparent to the UE 104 but require the base station 108 to buffer fresh data from the relocated QoS flow.

After a QoS flow to DRB mapping for a QFI has been changed from an old DRB to the new DRB, the base station 108 may buffer the UL SDUs received for a particular QFI flow on the new DRB until it has received the SDAP end marker control PDU on the old DRB for the same QFI. Once the base station 108 receives and processes the end marker control PDU for the QFI, it may forward the pending UL SDUs belonging to that QFI to upper sublayers (and UPF).

In cases in which a DRB is configured with RLC unacknowledged mode (UM), the UE 104 may not know whether the base station 108 has successfully received the SDAP end marker control PDU. If the base station 108 does not receive the SDAP end marker control PDU, the base station 108 may buffer uplink data for an excessive period of time, which may hamper user experience. Problems from the network not properly receiving the SDAP end marker may be more pronounced at QoS flow to DRB mapping within one base station, as opposed to handovers.

In the DL, the SDAP RDI packet from the base station 108 may also be lost in the RLC UM mode. Thus, the UE 104 may continue to send uplink packets of the QFI on the old DRB.

User datagram protocol (UDP) with RLC UM mode on a dedicated DRB may be a likely deployment for low latency communications such as, for example, ultra-reliable, low latency communications (URLCC) and extended reality (XR) use cases. These use cases may not tolerate large delays. Thus, embodiments herein describe processes related to transmitting and receiving RDI and SDAP end markers to provide proper operation of low-latency communications.

In some embodiments, end markers may be transmitted with enhanced reliability. Two alternatives are described for transmitting end markers with enhanced reliability in RLC UM mode. These and other alternatives described herein are not mutually exclusive. For example, some aspects from the first alternative may be used in conjunction with the second alternative and vice versa.

In the first alternative, the UE 104 may retransmit an SDAP end marker PDU with enhanced reliability based on hybrid automatic repeat request (HARQ) negative acknowledgment (NACK), retransmission grant, or predefined time intervals. In some embodiments, aspects of survival time operation (including, for example, the trigger conditions for entering survival time) that may be used in industrial Internet of things (IoT) applications may be used for retransmitting SDAP end marker PDUs. Survival time provides a period of time in which an application consuming a communication service may continue without an anticipated message/burst. In some embodiments, survival time may be similar to that described in 3GPP TS 22.261 v18.3.0 (2021-06-25).

In a first option of the first alternative, retransmission of the SDAP end marker PDU may be rely on survival time. For example, if the UE 104 receives a HARQ NACK or a retransmission grant for a TB that includes an end marker, the UE 104 may enter survival time and re-transmit the end marker with enhanced reliability. Alternatively, the UE may enter survival time through another method for the purpose of retransmitting the end marker with enhanced reliability. Re-transmitting the end marker with enhanced reliability may be accomplished by PDCP duplication (for example, generating and transmitting duplicate PDCP packets that include the end marker), or adaptive L1/L2 configurations. The adaptive L1/L2 configurations may include using a high-reliability PUSCH configuration (for example, one that includes a more robust modulation and coding scheme, transport block repetition, different redundancy version, higher power, frequency hopping, modified logical channel prioritization restrictions, etc.) when transmitting end markers with enhanced reliability. The adaptive L1/L2 configurations that enhance reliability may be preconfigured. PDUs that do not include the end markers may be transmitted with non-enhanced reliability settings/configurations.

The event to trigger survival time entry may be built upon receiving a HARQ NACK or a retransmission grant for the TB with the end marker, expiration of a timer, or other triggers similar to survival time triggers. In embodiments in which the HARQ NACK ore retransmission grant is used to enter survival time, the SDAP sublayer may provide an indication to lower layers that a packet includes an SDAP end marker PDU. The lower layer may use this indication as a flag that a transmission indication (failure/success) for the packet is to be provided to the SDAP sublayer.

In some embodiments, the UE 104 may be configured with survival time on a DRB in different modes. For example, survival time (e.g., transmission with enhanced reliability) may be used for: end marker PDUs only; all PDUs, but any loss of an end marker control PDU may trigger survival time immediately regardless of other survival time triggers for the DRB; or survival time mode.

In a second option, aspects independent of survival time may be defined to increase the reliability of the PDU carrying the end marker. The network, through the base station 108, for example, may preconfigure and activate additional resources whenever an SDAP end marker is expected from the UE 104. The additional resources, which may be activated for a limited time only, may allow for PDCP duplication and the mapping to RLC entities that the UE 104 may use to increase reliability of a retransmitted end marker. For example, an end marker may be retransmitted with enhanced reliability by using PDCP duplication. Other methods of enhancing reliability similar to those discussed above may also be used (L1/L2 adaptive configurations, TB repetitions, etc.). Additionally/alternatively, the network may activate additional or modified resources based upon detection of an unsuccessful uplink transmission (for example, for a DRB in which an end marker is expected). In some embodiments, the additional or modified resources may be activated by the base station 108 at a point after the DL transmission with the RDI bit set (for example, 316 in FIG. 3). The additional or modified resources may be activated for a preconfigured period of time.

In some embodiments, the network may activate the additional resources when an initial transmission of the end marker is expected. In other embodiments, the additional resources may not be activated until the network determines an initial transmission should have been received. Thus, the network may activate the additional or modified radio resources for the re-transmission of the end marker. In some embodiments, the UE 104 may retransmit the end marker after a predefined time interval even without waiting for a lower-layer trigger. The timing of the network activating the additional resources may be based on the predefined time interval.

In a second alternative for transmitting the end marker with enhanced reliability in RLC UM, every end marker may be sent with enhanced reliability. The enhanced reliability options may be similar to those discussed above with respect to the first alternative; however, in this alternative, the enhanced reliability settings may be used for the initial transmission of the end marker as well as the retransmissions.

In a first option of alternative two, in order to send the end marker control PDU with enhanced reliability, the UE 104 may enter survival time mode immediately. For example, the UE 104 may enter survival time mode while the end marker PDU is being constructed and transmitted for a DRB.

In a second option of alternative two, the UE 104 may use opportunistic PDCP duplication for end marker packets on a DRB. Typically, when PDCP duplication is activated, all packets on a DRB are expected to be duplicated. However, in this embodiment, only the end marker may be duplicated. This may enhance reliability for transmission of the end marker by providing frequency diversity. The network may preconfigure resources to enable this option.

Additionally/alternatively, other methods of enhancing reliability of transmission of the end marker similar to those discussed above with respect to the first alternative, may be used for the initial transmission of the end marker.

In some embodiments, the UE 104 may be configured or may be allowed to send one or more end markers. For example, upon receiving an RDI bit for reflective QoS (a single time), or following a change of the QoS flow to DRB mapping in RLC UM (e.g., through RRC reconfiguration), the UE 104 may send up to a plurality of end markers in the uplink. In this option, the network may only trigger the end marker once (by sending the RDI bit, for example), but the UE 104 may be allowed to repeat the end marker. 3GPP TSs 38.300 v16.6.0 (2021-06) and 37.324, which currently restrict end marker transmission to a single instance, may be updated to permit transmission of a plurality of end markers based on a single trigger.

While an initial transmission of the end marker may be on the old DRB, the retransmissions may be on the old DRB (if it still exists), or the new DRB. When the base station 108 receives the end marker (either the initial transmission or a retransmission), the base station 108 may release the buffered DRB data.

The UE 104 may send the one or more end markers in accordance with one or more of the following seven options.

In a first option, the UE 104 may space the plurality of end marker control PDUs apart to ensure that different end markers do not go on a same MAC PDU. This may prevent the loss of one MAC PDU resulting in the loss of the plurality of end markers.

In a second option, a prohibit timer may be used. For example, the UE 104 may initiate a prohibit timer upon an initial transmission of an end marker. The UE 104 may then retransmit the end marker after the prohibit timer expires, provided that the old DRB is still there. In some embodiments, the UE 104 may repeat this process until the old DRB is released or a counter tracking a total number of end marker transmissions reaches a predetermined threshold.

In a third option, the SDAP sublayer may track delivery of end markers. For example, the SDAP sublayer may keep a copy of the original SDAP end marker PDU. If the SDAP sublayer receives an indication from lower layers that the SDAP end marker PDU was not transmitted successfully, the SDAP sublayer may resubmit the SDAP end marker control PDU to lower sublayers for retransmission. The SDAP sublayer may delete the stored end marker PDU upon release of the old DRB.

In a fourth option, the PDCP sublayer may track delivery of end markers. For example, the PDCP sublayer may keep a copy of the original PDCP PDU that includes the end marker. In some embodiments, the SDAP sublayer may provide the PDCP sublayer an indication that an SDAP PDU is an end marker PDU so the PDCP sublayer can flag the PDCP PDU that includes the end marker. If the PDCP sublayer receives an indication from lower layers that the PDCP PDU with the end marker was not transmitted successfully, the PDCP sublayer may resubmit the PDCP PDU carrying the end marker to lower sublayers. The PDCP sublayer may delete the stored PDCP PDU with the end marker upon release of the old DRB.

In a fifth option, the RLC sublayer may track the delivery of end markers. For example, the RLC sublayer may keep a copy of the original RLC PDU that includes the end marker. In some embodiments, the higher sublayers (for example, the SDAP sublayer and the PDCP sublayer) may provide the RLC sublayer an indication that a PDCP PDU includes an end marker PDU so the RLC sublayer can flag the RLC PDU that includes the end marker. If the RLC sublayer receives an indication from lower layers that the RLC PDU including the end marker was not transmitted successfully, the RLC sublayer may resubmit the RLC PDU carrying the end marker to lower layers. The RLC sublayer may delete the stored RLC PDU having the end marker upon release of the old DRB. In some embodiments, the RLC UM operation may be extended to cover this option.

In a sixth option, the base station 108 may configure the UE 104 with a number (X) of end marker transmissions in RLC UM. In these embodiments, when the UE 104 detects the initial trigger, it may then send X end marker transmissions.

In a seventh option, the base station 108 may configure the UE 104 with a maximum number (Xₘₐₓ) of end marker transmissions in RLC UM. In these embodiments, when the UE 104 detects the initial trigger, it may send up to Xₘₐₓ end markers. However, the UE 104 may send less than the maximum if, for example, the UE 104 determines that an end marker was successfully received by the base station 108.

In some embodiments, the UE 104 may use an explicit acknowledgment for the end marker. For example, the base station 108 may use a DL SDAP end marker acknowledgment to explicitly acknowledge reception of the SDAP end marker PDU for a particular QFI.

The UE 104 may use a timer, *T_{sdap_end_marker_ack},* in the SDAP sublayer to define a period in which the explicit acknowledgment is expected to be received from the base station 108. The SDAP sublayer may start the timer after submitting the end marker to lower sublayers (for example, the PDCP sublayer) in the uplink. The SDAP sublayer may stop the timer when it receives the DL SDAP end marker ACK control PDU. If the timer expires without receiving the ACK, the SDAP sublayer may be triggered to retransmit the end marker control PDU. In some embodiments, the timer value may be greater than or equal to a UE queuing delay for uplink plus a product of a HARQ round trip time (RTT) and a maximum number of RTT retransmissions. The timer value may be configured by the network in some embodiments.

In the event the SDAP sublayer does not receive the SDAP end marker ACK control PDU before the timer expires, the UE 104 may retransmit the SDAP end marker control PDU in the uplink and restart the timer. In some embodiments, the retransmission of the SDAP end marker may be performed with enhanced reliability as discussed above.

In some embodiments, the use of the SDAP end marker ACK and related parameters (for example, the timer value) may be configurable by the network. For example, in some embodiments the network may only configure the SDAP end marker ACK for QFIs mapped to RLC UM transmissions.

The base station 108 may signal the SDAP end marker ACK in accordance with one or more of the following five options in various embodiments.

In a first option, the base station 108 may generate the end marker ACK as an SDAP PDU that only includes a DL SDAP header, which may have both the RDI field and the RQI field set to one and the QFI field populated to indicate the actual QFI. Thus, the end marker ACK may be one-byte SDAP PDU. If the UE 104 receives an SDAP PDU that only includes a one-byte SDAP header (e.g., without an SDAP data field or as a DL control PDU), with the RDI and the RQI bits both set to one, the UE 104 may interpret the PDU as an SDAP end marker ACK. In the event the base station 108 intends to set both RDI and RQI bits to one at the same time without signaling an ACK, the SDAP PDU may need to include a data field populated with some data.

In a second option, one byte may be added to the SDAP header to include the acknowledgment. This mitigation option may impact the size of the DL SDAP header as reserved header bits may not be currently available in the DL SDAP header.

A third option may be an extension of the first and second options to specify an associated PDCP PDU type. For example, the DL SDAP header that acts as the acknowledgement may be sent as a payload (PDCP SDU) in a PDCP data PDU. For another example, the DL SDAP header that acts as the acknowledgment may be sent in a PDCP control PDU as a parameter.

In a fourth option, the base station 108 may use a new PDCP control PDU for the SDAP end marker feedback. If the PDCP sublayer in the UE 104 receives the new PDCP control PDU, the PDCP sublayer may deliver an indication (or corresponding end marker feedback) to the SDAP sublayer in the UE 104. The new PDCP control PDU may include, for example, a one bit acknowledgment or a six-bit QFI (or PC5 QFI (PQFI)) as parameters, or just feedback. In other embodiments, other options may be used for the new PDCP control PDU.

A fifth option may include extending the PDCP "Control PDU for PDCP status report" with a new field that may be used to report the end-marker acknowledgement (feedback). On reception of an end-marker feedback, the PDCP layer may deliver an indication (or the corresponding end-marker feedback) to the SDAP protocol. The new end-marker feedback may include, for example, a one-bit ACK or a 6-bit QFI/PQFI, or just "feedback" as parameters. Other options are not precluded.

Some of these options may facilitate the case where SDAP end marker feedback does not need to be associated with a sequence number. For example, the third option (in which the DL SDAP header is sent in a PDCP control PDU is a parameter), the fourth option, and the fifth option may be especially useful in these situations.

In some embodiments, repetition of the end marker may be triggered in the UE 104. For example, the UE 104 may repeat the SDAP end marker control PDU for RLC UM mode to increase reliability upon detecting certain trigger conditions. These embodiments may mitigate the situation in which an RDI bit update from the base station 108 was lost with RLC UM in downlink.

The base station 108 may repeat transmission of the RDI in certain conditions set forth in the following two alternatives in accordance with some embodiments.

In a first alternative, the base station 108 may repeat transmission of the RDI based on a buffer occupancy of the base station 108 in the uplink data path. For example, if an uplink buffer at the base station 108 for a particular QFI crosses a predetermined threshold, the base station 108 may retransmit the RDI. The threshold may be configured to the base station 108 by an operation and maintenance (O&M) function or left to base station implementation.

In a second alternative, the base station 108 may repeat transmission of the RDI based on an expiration of a timer for receiving the end marker for a particular QFI. The timer at the base station 108 may be started when the first uplink packet belonging to the same QFI is received on a new DRB or alternatively when the base station 108 initially transmits the RDI. The expected timer value may be greater than or equal to a UE queuing delay for uplink plus a product of the HARQ RTT and max RTT retransmissions. When the timer expires, the base station 108 may retrigger RDI transmission. Alternatively, the base station 108 may, upon expiration of the timer, assume the end marker was lost and, therefore, release its buffer DRB data.

Retriggering the RDI bit set in the SDAP header for the same QFI in downlink direction used in either of the two alternatives discussed above may be performed in accordance with either of the following two options. In a first option, a one-byte DL PDCP SDU (SDAP PDU) that only includes an SDAP header may be used. The SDAP header will contain the RDI set to one with a valid QFI populated. In a second option, the RDI bit may be set in an SDAP header that is part of the next DL SDU received at the base station 108 belonging to same QFI. This may be considered an in-band technique on top of a DL IP packet of the same QFI.

The re-triggered RDI bit set for the same QFI may be sent on either the old DRB (if it still exists) or the new DRB. From an uplink perspective, each SDAP end marker control PDU may be associated with a sequence number on the PDCP level. Therefore, the base station 108 may link the end marker with the position for the uplink packets from the UE 104. Resending the end marker on the old DRB may be generally preferable as long as the old DRB still exists. If the end marker is only received on the new DRB, the base station may infer that the end marker was missed on the old DRB.

While 3GPP primarily specifies UE behavior, 3GPP TSs (for example, 3GPP TSs 38.300 and 37.324) may be updated to indicate an option for the network to repeat the RDI bit setting consistent with embodiments described herein. In some embodiments, 3GPP TSs may be updated to accommodate the handling of the retrigger of an SDAP end marker control PDU when the RDI was detected again for the same QFI. For example, 3GPP TS 37.324 presently indicates that the UE is to only send an end marker in case of "stored QoS flow to DRB mapping rule for the QoS flow is different from QoS flow to DRB mapping of the DL SDAP data PDU." To accommodate the resetting of the RDI bit described in the above alternatives, TS 37.324 may be updated to indicate that a UE can send one or more end markers based on one or more triggers (for example RDI transmissions) from the base station.

In some embodiments, the base station 108 may set the RDI bit for multiple back-to-back packets (or in one or more DL SDAP PDUs) for the same QFI. This may be similar, in some aspects, to the RQI handling where the UPF marks back-to-back packets with RQI. The UE 104 may produce multiple end marker control PDUs having the same content and all associated with the old DRB. In some embodiments, an SDAP end marker prohibit timer may be introduced in the UE in the uplink per QFI. This prohibit timer may be used to avoid sending the end marker in the uplink too frequently.

In some embodiments, an SDAP start-marker PDU may be introduced. This may be sent on the new DRB. A start marker is a new SDAP control PDU that marks the first sequence number on the new DRB. On reception of a start marker, the base station 108 may release the packets in its buffers (similar to what happens on reception of the end marker). There may be a high probability that the SDAP end marker and the SDAP start-marker are part of one transport block, which may get lost. This may be mitigated by using methods in solution 1 or two above, where start-marker is used instead of an end marker.

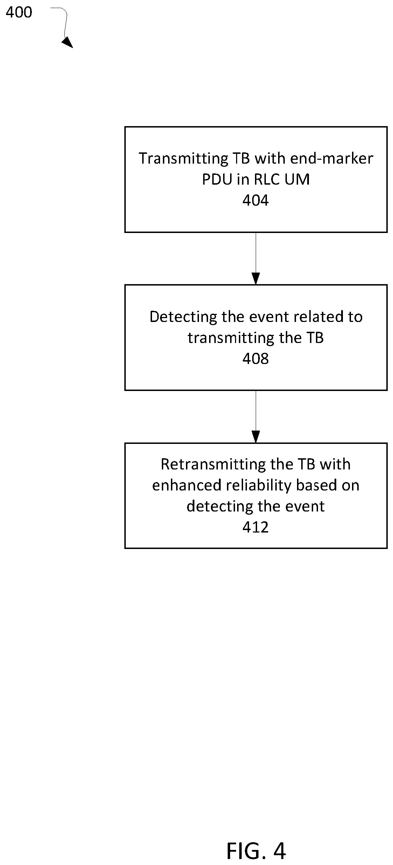

FIG. 4 illustrates an operation flow/algorithmic structure 400 in accordance with some embodiments. The operation flow/algorithmic structure 400 may be performed by a UE such as, for example, UE 104, UE 700, or components thereof, for example, baseband circuitry 704A.

The operation flow/algorithmic structure 400 may include, at 404, transmitting a transport block with an end marker PDU in RLC UM. The end marker PDU may be an SDAP PDU that is generated as an indication to the network of a last packet that is being transmitted on an old (for example, switched-from) DRB associated with a QFI.

The operation flow/algorithmic structure 400 may further include, at 408, detecting an event related to transmitting the transport block. In some embodiments the event may be a receipt of a negative acknowledgment, a retransmission grant, or a failure indication corresponding to transmission of the transport block. The negative acknowledgment or a failure indication may be provided to an SDAP sublayer from lower layers. In another embodiment, the event may be expiration of a timer, started when the transport block was originally transmitted, without receiving an indication of a successful transmission of the transport block. In some embodiments, the timer may be in PDCP or SDAP and may be started when the end marker control PDU is submitted to lower layers. An indication of a successful transmission may be a DL SDAP PDU that acts as, or otherwise indicates, the network acknowledgment of receiving the end marker PDU. In some embodiments, a successful transmission indication may include, e.g., a HARQ ACK or another Tx success indication that lower layers can provide to upper layers.

The operation flow/algorithmic structure 400 may further include, at 412, retransmitting the transport block with enhanced reliability based on detecting the event at 408. To transmit the transport block with enhanced reliability, the UE may retransmit the transport block with transport block repetition, PDCP duplication, or an enhanced reliability PUSCH configuration. It may be noted that if PDCP duplication is used, two PDUs may exist (with each having the same end marker) and two transport blocks. However, the transport blocks, as such, may not be transmitted with PDCP duplication as the supplication happens at the PDCP level.

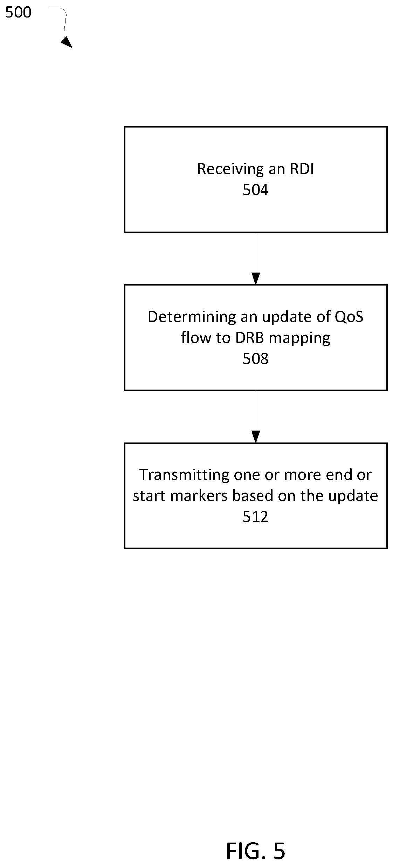

FIG. 5 illustrates an operation flow/algorithmic structure 500 in accordance with some embodiments. The operation flow/algorithmic structure 500 may be performed by a UE such as, for example, UE 104, UE 700, or components thereof, for example, baseband circuitry 704A.

The operation flow/algorithmic structure 500 may include, at 504, receiving an RDI. The RDI may be received by processing an SDAP header to detect a value of the RDI field. The RDI may be detected if the bit in the RDI field is set to one.

The operation flow/algorithmic structure 500 may further include, at 508, determining an update of a QoS flow to DRB mapping. For example, the SDAP header that includes the RDI may be transmitted on a new (switched-to) DRB and may have a QFI that was previously associated with the old (switched-from) DRB. The UE may then know that the QoS flow corresponding to the QFI is to be transmitted on the new DRB going forward.

The operation flow/algorithmic structure 500 may further include, at 512, transmitting one or more end or start markers based on the update determined at 508. If the UE transmits an end marker, it may be transmitted on the old DRB. If the UE transmits a start marker, it may be transmitted on the new DRB.

In some embodiments, the UE may transmit a plurality of end/start markers. The plurality may be transmitted based on the original trigger, for example, the determination of the update at 508. In other embodiments, an initial end/start marker transmission may be transmitted based on the original trigger, and one or more retransmissions of the end/start marker may be performed based on detecting additional trigger conditions (for example, receiving a NACK corresponding to the initial end marker transmission, or not receiving an ACK).

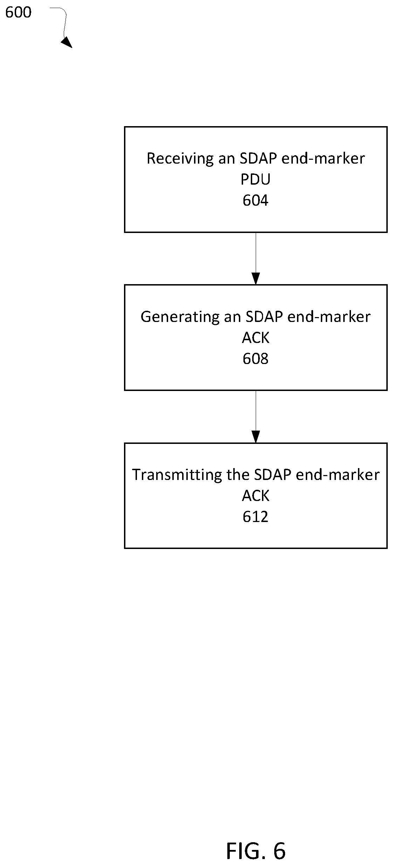

FIG. 6 illustrates an operation flow/algorithmic structure 600 in accordance with some embodiments. The operation flow/algorithmic structure 600 may be performed by a base station such as, for example, base station 108, UE 800, or components thereof, for example, baseband circuitry 804A.

The operation flow/algorithmic structure 600 may include, at 604, receiving an SDAP end marker PDU. The end marker PDU may be received on an old DRB and may indicate the last transmission from the UE on a switched-from DRB for a given QFI that has been subjected to a mapping update.

The operation flow/algorithmic structure 600 may further include, at 608, generating an SDAP end marker ACK. The ACK may be generated by setting both RDI and RQI bits in an SDAP-header only SDAP PDU. In other embodiments, the ACK may be generated by providing an indication in a new field of a SDAP header field; as a payload in a PDCP data PDU; as a parameter in a PDCP control PDU; in a PDCP control PDU type specifically designed for transmitting end marker feedback; or a new field in a PDCP control PDU for status report.

The operation flow/algorithmic structure 600 may further include transmitting the SDAP end marker ACK. This ACK may be transmitted to the UE on the old DRB or the new DRB.

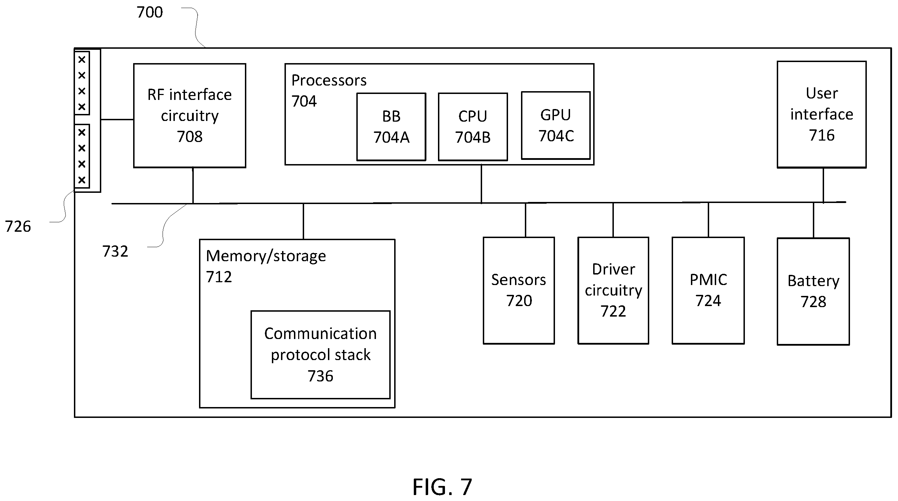

FIG. 7 illustrates a UE 700 in accordance with some embodiments. The UE 700 may be similar to and substantially interchangeable with UE 104 of FIG. 1.

The UE 700 may be any mobile or non-mobile computing device, such as, for example, mobile phones, computers, tablets, XR devices, glasses, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 700 may include processors 704, RF interface circuitry 708, memory/storage 712, user interface 716, sensors 720, driver circuitry 722, power management integrated circuit (PMIC) 724, antenna structure 726, and battery 728. The components of the UE 700 may be implemented as integrated circuits (ICs), portions thereof, discrete electronic devices, or other modules, logic, hardware, software, firmware, or a combination thereof. The block diagram of FIG. 7 is intended to show a high-level view of some of the components of the UE 700. However, some of the components shown may be omitted, additional components may be present, and different arrangement of the components shown may occur in other implementations.

The components of the UE 700 may be coupled with various other components over one or more interconnects 732, which may represent any type of interface, input/output, bus (local, system, or expansion), transmission line, trace, or optical connection that allows various circuit components (on common or different chips or chipsets) to interact with one another.

The processors 704 may include processor circuitry such as, for example, baseband processor circuitry (BB) 704A, central processor unit circuitry (CPU) 704B, and graphics processor unit circuitry (GPU) 704C. The processors 704 may include any type of circuitry or processor circuitry that executes or otherwise operates computer-executable instructions, such as program code, software modules, or functional processes from memory/storage 712 to cause the UE 700 to perform operations as described herein.

In some embodiments, the baseband processor circuitry 704A may access a communication protocol stack 736 in the memory/storage 712 to communicate over a 3GPP compatible network. In general, the baseband processor circuitry 704A may access the communication protocol stack 736 to: perform user plane functions at a PHY layer, MAC layer, RLC sublayer, PDCP sublayer, SDAP sublayer, and upper layer; and perform control plane functions at a PHY layer, MAC layer, RLC sublayer, PDCP sublayer, RRC layer, and a NAS layer. In some embodiments, the PHY layer operations may additionally/alternatively be performed by the components of the RF interface circuitry 708.

The baseband processor circuitry 704A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 712 may include one or more non-transitory, computer-readable media that includes instructions (for example, communication protocol stack 736) that may be executed by one or more of the processors 704 to cause the UE 700 to perform various operations described herein. The memory/storage 712 include any type of volatile or non-volatile memory that may be distributed throughout the UE 700. In some embodiments, some of the memory/storage 712 may be located on the processors 704 themselves (for example, L1 and L2 cache), while other memory/storage 712 is external to the processors 704 but accessible thereto via a memory interface. The memory/storage 712 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 708 may include transceiver circuitry and radio frequency front module (RFEM) that allows the UE 700 to communicate with other devices over a radio access network. The RF interface circuitry 708 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna structure 726 and proceed to filter and amplify (with a low-noise amplifier) the signal. The signal may be provided to a receiver of the transceiver that down-converts the RF signal into a baseband signal that is provided to the baseband processor of the processors 704.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 726.

In various embodiments, the RF interface circuitry 708 may be configured to transmit/receive signals in a manner compatible with NR access technologies.

The antenna 726 may include antenna elements to convert electrical signals into radio waves to travel through the air and to convert received radio waves into electrical signals. The antenna elements may be arranged into one or more antenna panels. The antenna 726 may have antenna panels that are omnidirectional, directional, or a combination thereof to enable beamforming and multiple input, multiple output communications. The antenna 726 may include microstrip antennas, printed antennas fabricated on the surface of one or more printed circuit boards, patch antennas, or phased array antennas. The antenna 726 may have one or more panels designed for specific frequency bands including bands in FR1 or FR2.

The user interface circuitry 716 includes various input/output (I/O) devices designed to enable user interaction with the UE 700. The user interface 716 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 700.

The sensors 720 may include devices, modules, or subsystems whose purpose is to detect events or changes in its environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 722 may include software and hardware elements that operate to control particular devices that are embedded in the UE 700, attached to the UE 700, or otherwise communicatively coupled with the UE 700. The driver circuitry 722 may include individual drivers allowing other components to interact with or control various input/output (I/O) devices that may be present within, or connected to, the UE 700. For example, driver circuitry 722 may include a display driver to control and allow access to a display device, a touchscreen driver to control and allow access to a touchscreen interface, sensor drivers to obtain sensor readings of sensor circuitry 720 and control and allow access to sensor circuitry 720, drivers to obtain actuator positions of electro-mechanic components or control and allow access to the electro-mechanic components, a camera driver to control and allow access to an embedded image capture device, audio drivers to control and allow access to one or more audio devices.

The PMIC 724 may manage power provided to various components of the UE 700. In particular, with respect to the processors 704, the PMIC 724 may control power-source selection, voltage scaling, battery charging, or DC-to-DC conversion.

In some embodiments, the PMIC 724 may control, or otherwise be part of, various power saving mechanisms of the UE 700 including DRX as discussed herein.

A battery 728 may power the UE 700, although in some examples the UE 700 may be mounted deployed in a fixed location, and may have a power supply coupled to an electrical grid. The battery 728 may be a lithium ion battery, a metal-air battery, such as a zinc-air battery, an aluminum-air battery, a lithium-air battery, and the like. In some implementations, such as in vehicle-based applications, the battery 728 may be a typical lead-acid automotive battery.

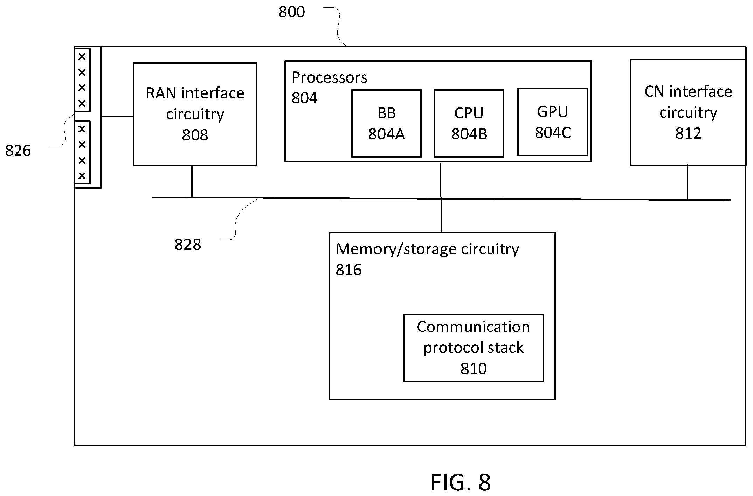

FIG. 8 illustrates a base station 800 in accordance with some embodiments. The base station 800 may be similar to and substantially interchangeable with base station 108 of FIG. 1.

The network device 800 may include processors 804, RF interface circuitry 808 (if implemented as a base station), core network (CN) interface circuitry 812, memory/storage circuitry 816, and antenna structure 826 (if implemented as a base station).

The components of the network device 800 may be coupled with various other components over one or more interconnects 828.

The processors 804, RF interface circuitry 808, memory/storage circuitry 816 (including communication protocol stack 810), antenna structure 826, and interconnects 828 may be similar to like-named elements shown and described with respect to FIG. 7. If the device 800 is implemented as a base station, the communication protocol stack 810 may include access stratum layers. If the network device 800 is implemented as a device in the core network 82, the communication protocol stack 810 may include a NAS layer.

The CN interface circuitry 812 may provide connectivity to a core network, for example, a 5^{th} Generation Core network (5GC) using a 5GC-compatible network interface protocol such as carrier Ethernet protocols, or some other suitable protocol. Network connectivity may be provided to/from the base station 800 via a fiber optic or wireless backhaul. The CN interface circuitry 812 may include one or more dedicated processors or FPGAs to communicate using one or more of the aforementioned protocols. In some implementations, the CN interface circuitry 812 may include multiple controllers to provide connectivity to other networks using the same or different protocols.

In some embodiments, the base station 800 may be coupled with transmit receive points (TRPs) using the antenna structure 826, CN interface circuitry, or other interface circuitry.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

The scope of protection is defined by the appended claims.

## Claims

1. One or more computer-readable media having instructions that, when executed by one or more processors, cause a user equipment, UE, (104) to:
transmit a transport block with a service data application protocol, SDAP, end marker protocol data unit, PDU, in a radio link control, RLC, unacknowledged mode;
receive a hybrid automatic repeat request, HARQ, negative acknowledgment, NACK, or a retransmission grant for the transport block; and
enter a survival time mode and retransmit the SDAP end marker PDU with enhanced reliability based on said reception of the HARQ NACK or retransmission grant.

2. The one or more computer-readable media of claim 1, wherein to retransmit the SDAP end marker PDU with enhanced reliability the UE is to:
retransmit the SDAP end marker PDU with transport block repetition.

3. A method of operating a base station (108), the method comprising:
receiving, from a user equipment, UE, (104), a transport block with a service data adaptation, SDAP, end marker control protocol data unit, PDU,
generating a hybrid automatic repeat request, HARQ, negative acknowledgment, NACK, or a retransmission grant for the transport block; and
transmitting the HARQ NACK or retransmission grant to the UE to trigger a survival time mode for the UE and retransmission of the SDAP end marker PDU with enhanced reliability.

4. The method of claim 3, wherein retransmission of the SDAP end marker PDU with enhanced reliability comprises retransmission of the SDAP end marker PDU with transport block repetition.

5. The method of any of claims 3-4, wherein retransmission of the SDAP end marker PDU with enhanced reliability comprises retransmission of the SDAP end marker PDU with packet data convergence protocol, PDCP, duplication.

6. The method of any of claims 3-5, wherein retransmission of the SDAP end marker PDU with enhanced reliability comprises retransmission of the SDAP end marker PDU with a high-reliability physical uplink shared channel, PUSCH, configuration.

7. The one or more computer-readable media of claim 1 or 2, wherein to retransmit the SDAP end marker PDU with enhanced reliability the UE is to:
retransmit the SDAP end marker PDU with packet data convergence protocol, PDCP, duplication.

8. The one or more computer-readable media of claim 1, 2, or 7, wherein to retransmit the SDAP end marker PDU with enhanced reliability the UE is to:
retransmit the SDAP end marker PDU with a high-reliability physical uplink shared channel, PUSCH, configuration.

9. The one or more computer-readable media of claim 1, 2, 7, or 8,
wherein the instructions, when executed, further cause the UE to:
provide, by a SDAP sublayer of the UE to a lower-layer of the UE, an indication that a packet includes the SDAP end marker PDU; and
receive, at the SDAP sublayer from the lower layer of the UE, a failed transmission indication associated with the packet.

10. A method to be implemented by a user equipment, UE, (104), the method comprising:
transmitting a transport block with a service data application protocol, SDAP, end marker protocol data unit, PDU, in a radio link control, RLC, unacknowledged mode;
receiving a hybrid automatic repeat request, HARQ, negative acknowledgment, NACK, or a retransmission grant for the transport block; and
entering a survival time mode and retransmitting the SDAP end marker PDU with enhanced reliability based on said receiving the HARQ NACK or retransmission grant.

11. The method of claim 10, wherein retransmitting the SDAP end marker PDU with enhanced reliability comprises:
retransmitting the SDAP end marker PDU with transport block repetition.

12. The method of claim 10 or 11, wherein retransmitting the SDAP end marker PDU with enhanced reliability comprises:
retransmitting the SDAP end marker PDU with packet data convergence protocol, PDCP, duplication.

13. The method of any of claims 10-12, wherein retransmitting the SDAP end marker PDU with enhanced reliability comprises:
retransmitting the SDAP end marker PDU with a high-reliability physical uplink shared channel, PUSCH, configuration.

14. The method of any of claims 10-13, further comprising:
providing, by a SDAP sublayer of the UE to a lower-layer of the UE, an indication that a packet includes the SDAP end marker PDU; and
receiving, at the SDAP sublayer from the lower layer of the UE, a failed transmission indication associated with the packet

## Patentansprüche

1. Ein oder mehrere computerlesbare Medien mit Anweisungen, die, wenn sie von einem oder mehreren Prozessoren ausgeführt werden, ein Benutzergerät, UE, (104) veranlassen zum: Übertragen eines Transportblocks mit einer Dienstdatenanwendungsprotokoll-, SDAP-, Endmarkierungsprotokolldateneinheit, PDU, in einer Funkverbindungssteuerung, RLC, Empfangen einer negativen Bestätigung, NACK, einer hybriden automatischen Wiederholungsanforderung, HARQ, oder einer Neuübertragungsgewährung für den Transportblock; und Eintreten in einen Überlebenszeitmodus und Neuübertragen der SDAP-Endmarkierungs-PDU mit erhöhter Zuverlässigkeit basierend auf dem Empfang der HARQ-NACK oder der Neuübertragungsgewährung.

2. Ein oder mehrere computerlesbare Medien nach Anspruch 1, wobei zum Neuübertragen der SDAP-Endmarkierungs-PDU mit erhöhter Zuverlässigkeit das UE dient zum: Neuübertragen der SDAP-Endmarkierungs-PDU mit Transportblockwiederholung.

3. Verfahren zum Betreiben einer Basisstation (108), wobei das Verfahren umfasst: unbestätigten Modus; Empfangen, von einem Benutzergerät, UE, (104), eines Transportblocks mit einer Dienstdatenanpassungs-, SDAP-, Endmarkierungssteuerprotokolldateneinheit, PDU, Erzeugen einer negativen Bestätigung, NACK, einer hybriden automatischen Wiederholungsanforderung, HARQ, oder einer Neuübertragungsgewährung für den Transportblock; und Übertragen der HARQ-NACK oder der Neuübertragungsgewährung an das UE, um einen Überlebenszeitmodus für das UE und Neuübertragung der SDAP-Endmarkierungs-PDU mit erhöhter Zuverlässigkeit auszulösen.

4. Verfahren nach Anspruch 3, wobei Neuübertragung der SDAP-Endmarkierungs-PDU mit erhöhter Zuverlässigkeit Neuübertragung der SDAP-Endmarkierungs-PDU mit Transportblockwiederholung umfasst.

5. Verfahren nach einem der Ansprüche 3-4, wobei Neuübertragung der SDAP-Endmarkierungs-PDU mit erhöhter Zuverlässigkeit Neuübertragung der SDAP-Endmarkierungs-, PDCP-, PDU mit Paketdatenkonvergenzprotokollduplizierung umfasst.

6. Verfahren nach einem der Ansprüche 3-5, wobei Neuübertragung der SDAP-Endmarkierungs-PDU mit erhöhter Zuverlässigkeit Neuübertragung der SDAP-Endmarkierungs-PDU mit einer Konfiguration eines gemeinsam genutzten physikalischen Uplink-Kanals, PUSCH, mit hoher Zuverlässigkeit umfasst.

7. Ein oder mehrere computerlesbare Medien nach Anspruch 1 oder 2, wobei zum Neuübertragen der SDAP-Endmarkierungs-PDU mit erhöhter Zuverlässigkeit das UE dient zum: Neuübertragen der SDAP-Endmarkierungs-PDU mit Paketdatenkonvergenzprotokoll-, PDCP-, Duplizierung.

8. Ein oder mehrere computerlesbare Medien nach Anspruch 1, 2 oder 7, wobei zum Neuübertragen der SDAP-Endmarkierungs-PDU mit erhöhter Zuverlässigkeit das UE dient zum: Neuübertragen der SDAP-Endmarkierungs-PDU mit einer Konfiguration eines gemeinsam genutzten physikalischen Uplink-Kanals, PUSCH, mit hoher Zuverlässigkeit.

9. Ein oder mehrere computerlesbare Medien nach Anspruch 1, 2, 7 oder 8, wobei die Anweisungen, wenn sie ausgeführt werden, das UE ferner veranlassen zum:
Bereitstellen, durch eine SDAP-Unterschicht des UE an eine untere Schicht des UE, einer Anzeige, dass ein Paket die SDAP-Endmarkierungs-PDU enthält; und
Empfangen, an der SDAP-Unterschicht von der unteren Schicht des UE, einer Fehlschlagübertragungsanzeige, die mit dem Paket assoziiert ist.

10. Verfahren, das von einem Benutzergerät, UE, (104) zu implementieren ist, wobei das Verfahren umfasst: Übertragen eines Transportblocks mit einer Dienstdatenanwendungsprotokoll-, SDAP-, Endmarkierungsprotokolldateneinheit, PDU, in einem unbestätigten Modus einer Funkverbindungssteuerung, RLC; Empfangen einer negativen Bestätigung, NACK, einer hybriden automatischen Wiederholungsanforderung, HARQ, oder einer Neuübertragungsgewährung für den Transportblock; und Eintreten in einen Überlebenszeitmodus und Neuübertragen der SDAP-Endmarkierungs-PDU mit erhöhter Zuverlässigkeit basierend auf dem Empfang der HARQ-NACK oder der Neuübertragungsgewährung.

11. Verfahren nach Anspruch 10, wobei Neuübertragen der SDAP-Endmarkierungs-PDU mit erhöhter Zuverlässigkeit umfasst: Neuübertragen der SDAP-Endmarkierungs-PDU mit Transportblockwiederholung.

12. Verfahren nach Anspruch 10 oder 11, wobei Neuübertragen der SDAP-Endmarkierungs-PDU mit erhöhter Zuverlässigkeit umfasst: Neuübertragen der SDAP-Endmarkierungs-PDU mit Paketdatenkonvergenzprotokoll-, PDCP-, Duplizierung.

13. Verfahren nach einem der Ansprüche 10-12, wobei Neuübertragen der SDAP-Endmarkierungs-PDU mit erhöhter Zuverlässigkeit umfasst: Neuübertragen der SDAP-Endmarkierungs-PDU mit einer Konfiguration eines gemeinsam genutzten physikalischen Uplink-Kanals, PUSCH, mit hoher Zuverlässigkeit.

14. Verfahren nach einem der Ansprüche 10-13, ferner umfassend: Bereitstellen, durch eine SDAP-Unterschicht des UE an eine untere Schicht des UE, einer Anzeige, dass ein Paket die SDAP-Endmarkierungs-PDU enthält; und Empfangen, an der SDAP-Unterschicht von der unteren Schicht des UE, einer Fehlschlagübertragungsanzeige, die mit dem Paket assoziiert ist.

## Revendications

1. Un ou plusieurs supports lisibles par calculateur avec des instructions qui, lorsqu'elles sont exécutées par un ou plusieurs processeurs, amènent un équipement utilisateur, UE, (104) à :
transmettre un bloc de transport avec une unité de données de protocole, PDU, de marqueur de fin de protocole applicatif de données de service, SDAP, dans un mode non acquitté de contrôle de liaison radio, RLC ;
recevoir un accusé de réception négatif, NACK, de requête de répétition automatique hybride, HARQ, ou une autorisation de retransmission pour le bloc de transport ;
et
passer dans un mode de temps de survie et retransmettre la PDU de marqueur de fin de SDAP avec une fiabilité améliorée sur la base de ladite réception du NACK de HARQ ou de l'autorisation de retransmission.

2. Les un ou plusieurs supports lisibles par calculateur selon la revendication 1, dans lesquels, pour retransmettre la PDU de marqueur de fin de SDAP avec une fiabilité améliorée, l'UE doit :
retransmettre la PDU de marqueur de fin de SDAP avec une répétition de bloc de transport.

3. Un procédé de fonctionnement d'une station de base (108), le procédé comprenant :
la réception, en provenance d'un équipement utilisateur, UE (104), un bloc de transport avec une unité de données de protocole, PDU, de contrôle de marqueur de fin d'adaptation de données de service, SDAP, générant un accusé de réception négatif, NACK, de requête de répétition automatique hybride, HARQ, ou une autorisation de retransmission pour le bloc de transport ; et
la transmission du NACK de HARQ ou de l'autorisation de retransmission à l'UE pour déclencher un mode de temps de survie pour l'UE et la retransmission de la PDU de marqueur de fin de SDAP avec une fiabilité améliorée.

4. Le procédé selon la revendication 3, dans lequel la retransmission de la PDU de marqueur de fin de SDAP avec fiabilité améliorée comprend la retransmission de la PDU de marqueur de fin de SDAP avec une répétition de bloc de transport.

5. Le procédé selon l'une des revendications 3 à 4, dans lequel la retransmission de la PDU de marqueur de fin de SDAP avec fiabilité améliorée comprend la retransmission de la PDU de marqueur de fin de SDAP avec une duplication de protocole de convergence de données en paquets, PDCP.

6. Le procédé selon l'une des revendications 3 à 5, dans lequel la retransmission de la PDU de marqueur de fin de SDAP avec fiabilité améliorée comprend la retransmission de la PDU de marqueur de fin de SDAP avec une configuration de canal physique partagé de liaison montante, PUSCH, à haute fiabilité.

7. Les un ou plusieurs supports lisibles par calculateur selon la revendication 1 ou 2, dans lesquels, pour retransmettre la PDU de marqueur de fin de SDAP avec une fiabilité améliorée, l'UE doit :
retransmettre la PDU de marqueur de fin de SDAP avec une duplication de protocole de convergence de données en paquets, PDCP.

8. Les un ou plusieurs supports lisibles par calculateur selon la revendication 1, 2 ou 7, dans lesquels, pour retransmettre la PDU de marqueur de fin de SDAP avec une fiabilité améliorée, l'UE doit :
retransmettre la PDU de marqueur de fin de SDAP avec une configuration de canal physique partagé de liaison montante, PUSCH, à haute fiabilité.

9. Les un ou plusieurs supports lisibles par calculateur selon la revendication 1, 2, 7 ou 8, dans lesquels les instructions, lorsqu'elles sont exécutées, amènent en outre l'UE à :
délivrer, par une sous-couche SDAP de l'UE à une couche inférieure de l'UE, une indication qu'un paquet inclut la PDU de marqueur de fin de SDAP ; et
recevoir, au niveau de la sous-couche SDAP depuis la couche inférieure de l'UE, une indication d'échec de transmission associée au paquet.

10. Un procédé à mettre en œuvre par un équipement utilisateur, UE, (104), le procédé comprenant :
la transmission d'un bloc de transport avec une unité de données de protocole, PDU, de marqueur de fin de protocole applicatif de données de service, SDAP, dans un mode non acquitté de contrôle de liaison radio, RLC ;
la réception d'un accusé de réception négatif, NACK, de requête de répétition automatique hybride, HARQ, ou une autorisation de retransmission pour le bloc de transport ;
et
le passage dans un mode de temps de survie et la retransmission de la PDU de marqueur de fin de SDAP avec une fiabilité améliorée sur la base de ladite réception du NACK de HARQ ou de l'autorisation de retransmission.

11. Le procédé selon la revendication 10, dans lequel la retransmission de la PDU de marqueur de fin de SDAP avec une fiabilité améliorée comprend :
la retransmission de la PDU de marqueur de fin de SDAP avec une répétition de bloc de transport.

12. Le procédé selon la revendication 10 ou 11, dans lequel la retransmission de la PDU de marqueur de fin de SDAP avec une fiabilité améliorée comprend :
la retransmission de la PDU de marqueur de fin de SDAP avec une duplication de protocole de convergence de données en paquets, PDCP.

13. Le procédé selon l'une des revendications 10 à 12, dans lequel la retransmission de la PDU de marqueur de fin de SDAP avec une fiabilité améliorée comprend :
la retransmission de la PDU de marqueur de fin de SDAP avec une configuration de canal physique partagé de liaison montante, PUSCH, à haute fiabilité.

14. Le procédé selon l'une des revendications 10 à 13, comprenant en outre :
la délivrance, par une sous-couche SDAP de l'UE à une couche inférieure de l'UE, d'une indication qu'un paquet inclut la PDU de marqueur de fin de SDAP ; et
la réception, au niveau de la sous-couche SDAP depuis de la couche inférieure de l'UE, d'une indication d'échec de transmission associée au paquet.
